# EUROPEAN PATENT APPLICATION

(11) **EP 2 348 476 A2**
(43) Date of publication of application: **27.07.2011**
(21) Application number: 10191508.0
(22) Date of filing: 17.11.2010
(51) Int. Cl.: G06Q 30/00

(54) **Broadcast data mining for targeted mail stream solicitations**

(30) Priority: 17.12.2009 US 640609
(71) Applicant: Pitney Bowes Inc., Stamford, CT 06926 (US)
(72) Inventor: Quine, Douglas B., Bethel, CT 06801 (US); Rojas, John W., Norwalk, CT 06855 (US); Braun, John F., Fairfield, CT 06824 (US); Biasi, Theresa, Shelton, CT 06484 (US)
(74) Representative: HOFFMANN EITLE

(57) **Abstract**

A computer (112) receives information that indicates viewing and/or skipping of television commercials by a number of viewers (102). The computer (112) uses the information to compile statistics that summarize viewing and/or skipping of the television commercials within a geographical area. Based on the statistics, an advertising solicitation is selected by the geographic area and is dispatched on paper to recipients in the geographical area.

## Description

The invention disclosed herein relates generally to marketing via direct mail, and more particularly to computerized methods for making direct mail marketing decisions.

Consumers are bombarded with advertising messages via numerous channels, including broadcast media, Internet and paper ads and solicitations. More and more, advertisers wish to target their advertising so as to improve the efficacy of their marketing dollars and to make meaningful impressions on an increasingly jaded audience. There are also environmental concerns related to the undoubted waste of resources that occurs in connection with many advertising activities.

Many proposals for targeted marketing require the advertisers to "know" their potential customer, at least in terms of product preferences, shopping habits, demographic attributes, etc. However, this drive for customer knowledge on the part of advertisers may be inconsistent with consumers' desire for privacy-the consumers may prefer not to be "known". One type of marketing campaign that tries to resolve this conflict is targeted mailing of ads/solicitations to certain postal code areas (typically referred to as "ZIP codes" in the U.S.). Even though residents of a given ZIP code tend (to some extent) to exhibit certain similarities in terms of demographic attributes and purchasing tastes, there is still a great deal of uncertainty and inefficiency in ZIP-code-targeted direct mail advertising.

According to an aspect of the invention, a method includes receiving, in a computer, information that indicates viewing and/or skipping by a plurality of viewers of television commercials presented to the viewers. The method further includes using the information received by the computer to compile statistics in the computer, where the statistics summarize viewing and/or skipping of the television commercials within a geographical area. The method also includes selecting an advertising solicitation for the geographical area, based at least in part on the compiled statistics. Still further, the method includes dispatching the selected advertising solicitation on paper to recipients in the geographical area.

The selected advertising solicitation may be dispatched to the recipients by direct mail, and the geographical area may be defined by a single postal code or by a number of contiguous postal codes, including 10, 20, 100 or more postal codes. The selected advertising solicitation may alternatively be included in an advertising supplement delivered with a newspaper. The viewers for which the viewing information is compiled may include 20 viewers or a lesser or greater number of viewers. The viewing statistics may be compiled in a manner that does not disclose information concerning any particular individual or household.

According to still another aspect of the invention, a method includes compiling in a computer statistics that indicate viewer behavior within a geographical area, where the viewer behavior relates to viewing and/or skipping television commercials and relates to a plurality of viewers. The method further includes automatically selecting by the computer, based on the statistics, at least one advertising solicitation for presentation to recipients in the geographical area by a communication channel other than television.

Further in accordance with this aspect of the invention, the communication channel may be direct mail, a newspaper advertising supplement, automatic telephone solicitation or radio. The geographical area may be entirely within a single state or province, and the number of viewers that are the subject of the statistics may be 20 viewers or a greater or lesser number. The viewing statistics may be compiled in a manner that does not disclose information concerning any particular individual or household.

By basing direct mail or other marketing decisions on aggregated findings about viewers in a particular geographical area and their actual reactions to television commercials, marketing activities may be targeted with greater precision and more effectiveness than prior art marketing efforts.

Therefore, it should now be apparent that the invention substantially achieves all the above aspects and advantages. Additional aspects and advantages of the invention will be set forth in the description that follows, and in part will be obvious from the description, or may be learned by practice of the invention. Various features and embodiments are further described in the following figures, description and claims.

The accompanying drawings illustrate presently preferred embodiments of the invention, and together with the general description given above and the detailed description given below, serve to explain the principles of the invention. As shown throughout the drawings, like reference numerals designate like or corresponding parts.
FIG. 1 is a schematic representation of a system for targeted direct mail marketing provided in accordance with aspects of the present invention.
FIG. 2 is a block diagram representation of a typical digital video recorder (DVR) which performs some functions in the system of FIG. 1.
FIG. 3 is a block diagram representation of a computer that receives, analyzes and compiles viewing information in the system of FIG. 1.
FIG. 4 is a flow chart that illustrates a process performed by the DVR of FIG. 2 in accordance with aspects of the present invention.
FIG. 5 is a flow chart that illustrates a process that is at least partially performed by the computer of FIG. 3 in accordance with aspects of the present invention.

In accordance with aspects of the present invention, DVRs (digital video recorders) operated by numerous viewers keep track of what programs and commercials are played back via the DVRs and whether and to what extent the viewers watch or skip the commercials. The DVRs upload the viewing information to a central "data manager" computer, which cross-checks channel and timing information against a commercial ad database to compile statistics regarding which commercials are viewed and which skipped. The data manager computer aggregates the resulting information by geographical area, e.g. by ZIP code, and the viewers' collective interest in or skipping of particular commercials or types of commercials is used as an input for a process by which direct mail solicitations are selected for targeting to certain ZIP codes.

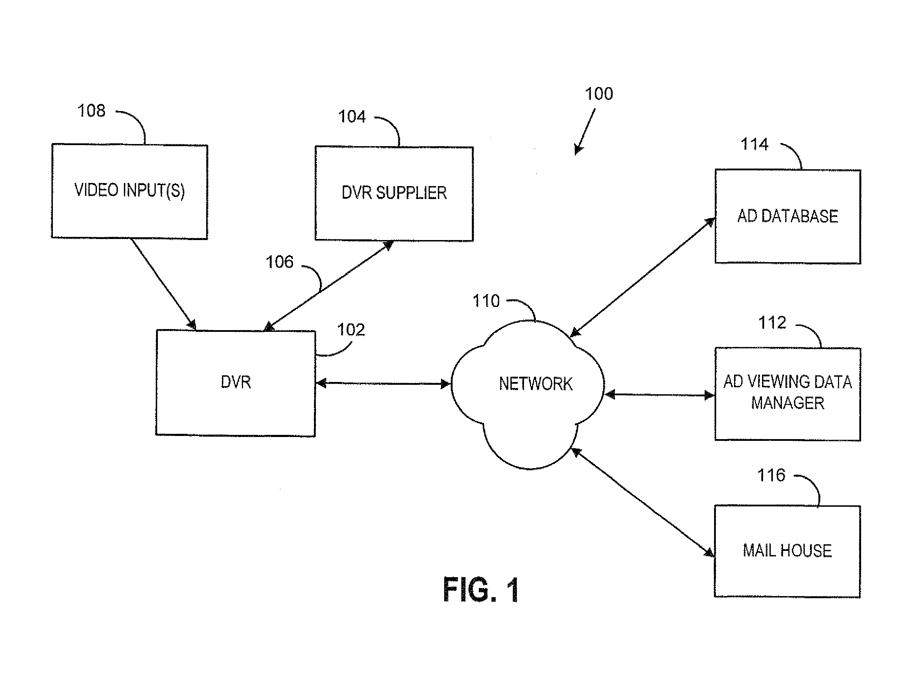

FIG. 1 is a schematic representation of a system 100 for targeted direct mail marketing provided in accordance with aspects of the present invention.

For purposes of simplified illustration, FIG. 1 shows just one DVR 102 (also referred to as a "DVR unit") as a constituent component of the system 100. However, in practice, as will be readily recognized, the system 100 may include thousands or even millions of individual DVRs. The DVRs may be concentrated in a few geographical areas or may be widely scattered, e.g., across the entire United States or even beyond. As is conventional with suppliers of DVRs, each individual DVR unit may be assigned a unique identifier, and the identifiers may be indexed in the records of the DVR supplier against the physical locations at which the DVRs are installed. That is, for example, a respective postal code (ZIP code) may be stored by the DVR supplier in association with each DVR identifier to indicate the physical location of the DVR in question. Also shown in FIG. 1 is a conventional remote control unit 103 which may be operated by a user (not shown) to provide wireless control signals to the DVR 102. It will be understood that at least one remote control unit 103 may be provided for each DVR 102 that participates in the system 100.

Block 104 represents the DVR supplier for the DVR 102 depicted in FIG. 1. Again, although only one DVR supplier is shown in the drawing, in practice there is no reason why the system 100 may not encompass plural DVR suppliers. (One very well known DVR supplier is known as "TiVo".) In addition to representing the DVR supplier itself, block 104 may also be considered to represent one or more computers operated by or on behalf of the DVR supplier. Among other functions, the DVR supplier/computer 104 may provide conventional information services to the DVR 102. Such services may include, for example, a channel guide/program directory service which gives the DVR unit information required for the DVR unit to determine what channel to tune to, and when, in order to record programs selected in advance for recording by the user of the DVR unit. The program directory information may be downloaded at regular intervals from the DVR supplier/computer 104 to the DVR unit 102 via a communication channel indicated at 106 in FIG. 1. The communication channel 106 may be, for example, a dial-up data communication channel that is established from time to time between the DVR supplier/computer 104 and the DVR unit 102. The communications channel 106 may also be a wired or wireless internet connection which is available continuously from the DVR 102 to the user's home local area network which can then connect to the DVR supplier 104.

In some embodiments, the DVR supplier may operate entirely in a conventional manner. In other embodiments, however, the DVR supplier may supply information (e.g., subscriber information) to the above-mentioned (and below-discussed) data manager (and/or to another party or parties) to aid the data manager in compiling information about commercial viewing behavior of the users of the DVRs.

Also in a conventional manner, the DVR unit 102 may receive video programming from one or more sources of video signals, collectively represented by block 108 in FIG. 1. For example, the video input(s) 108 may be constituted by a conventional cable television connection by which a package of cable television channels is provided to the DVR unit 102.

As will be readily appreciated, the DVR unit 102 is also connected in a conventional manner to a television set or monitor (not shown) by which the user of the DVR may view television programming stored on and played back by the DVR.

A data communication network 110 is also depicted in FIG. 1. The DVR unit 102 is connected to the data communication network 110 (at least from time to time) to permit the DVR unit 102 to exchange data communications with remote devices (such as the data manager). These data communication activities on the part of the DVR unit 102 may occur in substantially the same manner as data communication by a conventional personal computer. The data communication network 110 may, for example, be the Internet and/or one or more public and/or private data communication networks.

A computer 112 operated by or on behalf of an advertisement (television commercial) viewing data manager operation is also shown in FIG. 1, and is coupled to the data communication network 110. The data manager computer 112 corresponds to the data manager mentioned in the first paragraph of this "Detailed Description" and is provided in accordance with aspects of the present invention. Details concerning the data manager computer will be provided below.

Another component of the system 100, also coupled to the data communication network 110, is a commercial (ad) database 114. The ad database 114 is a data resource that stores information that identifies each commercial message presented on all cable, satellite and/or conventional television systems for which the system 100 applies. (For example, the ad database 114 may be comprehensive as to television programming available in the United States.) The record for each commercial in the ad database 114 may include the channel/system on which it was/will be presented, the time of presentation, and optionally one or more categories (e.g., product/service categories) to which the commercial belongs.

Also included in the system 100 is a computer 116 that is operated by an entity that engages in direct mail advertising/solicitations. The mailer computer 116 is coupled to the data communication network 110 and may, for example, be operated by a shared-envelope direct mail company. As will be seen, the mailer computer 116 may generate one or more direct mailings in response to input received by the mailer computer 116 from the data manager computer 112.

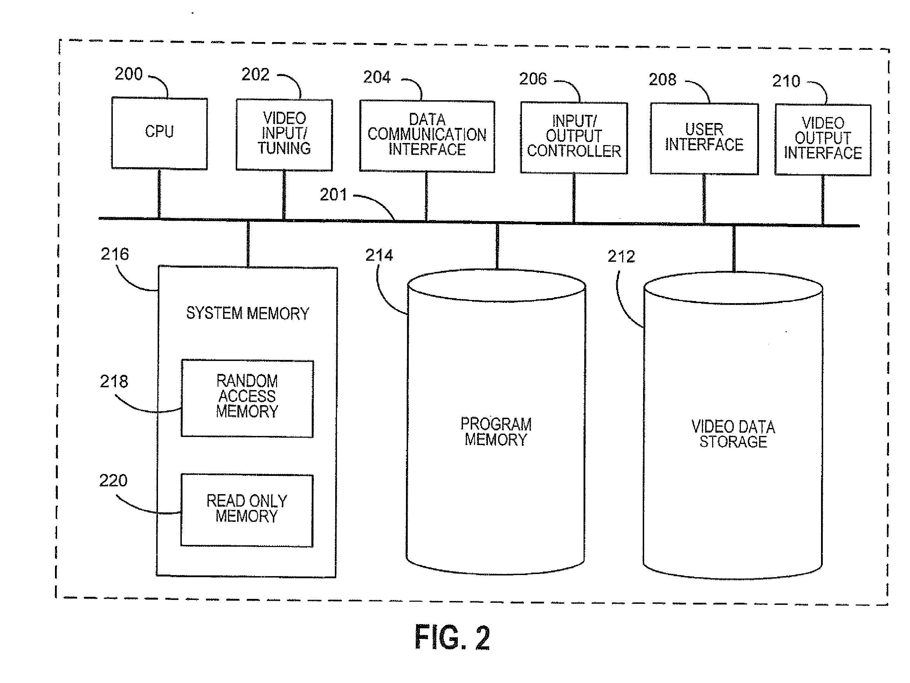

FIG. 2 is a block diagram representation of the digital video recorder (DVR) unit 102 shown in FIG. 1. As noted above, the DVR 102 is taken as typical or exemplary of the numerous DVRs that may participate in the system 100 shown in FIG. 1. The DVR 102 may be entirely conventional in terms of its hardware aspects, but may be programmed to operate in accordance with aspects of the present invention.

As depicted in FIG. 2, the DVR 102 includes a data bus 201. The DVR 102 also includes a computer processor (CPU) 200 which is operatively coupled to the data bus 201 and which may be constituted by one or more conventional processors. The DVR 102 further includes a video input/tuning module 202, a data communication interface 204, an input/output controller 206, one or more user interface devices 208 and a video output interface 210, all of which are also operatively coupled to the data bus 201.

The DVR 102 further includes a video data storage component 212, program memory 214, and system memory 216. The latter three components are also operatively coupled to the data bus 201.

The video input/tuning module 202 may be coupled to a cable television system (not indicated in FIG. 2) or other source of video signals (e.g., a satellite television receiver). The video input/tuning module 202 may for example, under control of the CPU 200, tune to particular video signal channels at particular times to implement choices input by the user relating to programs that the user wishes to record with the DVR 102.

The data communication interface 204 may operate to allow for data communication between the DVR 102 and one or more external devices, such as the DVR supplier/computer 104 and/or the data manager computer 112.

The input/output controller 206 may couple the DVR 102 to input and output devices, and the user interface 208 may allow for interaction between the user and the DVR 102. In some embodiments, for example, components 206 and 208 may be at least partially implemented with an interface to a wireless remote control unit (item 103, FIG. 1)) by which the user may control operation of the DVR 102.

The video output interface 210 may be coupled to a television set (not shown) for the purpose of outputting to the television set video signals played back by the DVR 102.

The video storage component 212 may, for example, be constituted by one or more hard disk drives, and may be utilized to store and play back video signals in accordance with control signals input into the DVR 102 by the user.

The program memory 214 may, for example, also be in the form of a hard disk drive and may store one or more programs for controlling the CPU 200. CPU 200 performs instructions of the programs, and thereby operates in accordance with aspects of the present invention. In some embodiments, the program memory 214 may be physically integrated (i.e., may share disk space) with the video storage component 212.

The system memory 216 may be constituted by, for example, a suitable combination of Random Access Memory (RAM) devices 218 and Read Only Memory (ROM) devices 220.

Apart from functionality related to the commercial viewing/skipping tracking aspects of the system 100, as described below, the DVR 102 may operate in a conventional fashion to record television program in accordance with control input from the user (e.g. via signals provided from the remote control unit 103, FIG. 1, or via actuation of local control buttons directly provided on the DVR 102), and to play back recorded programs, again in response to control input from the user.

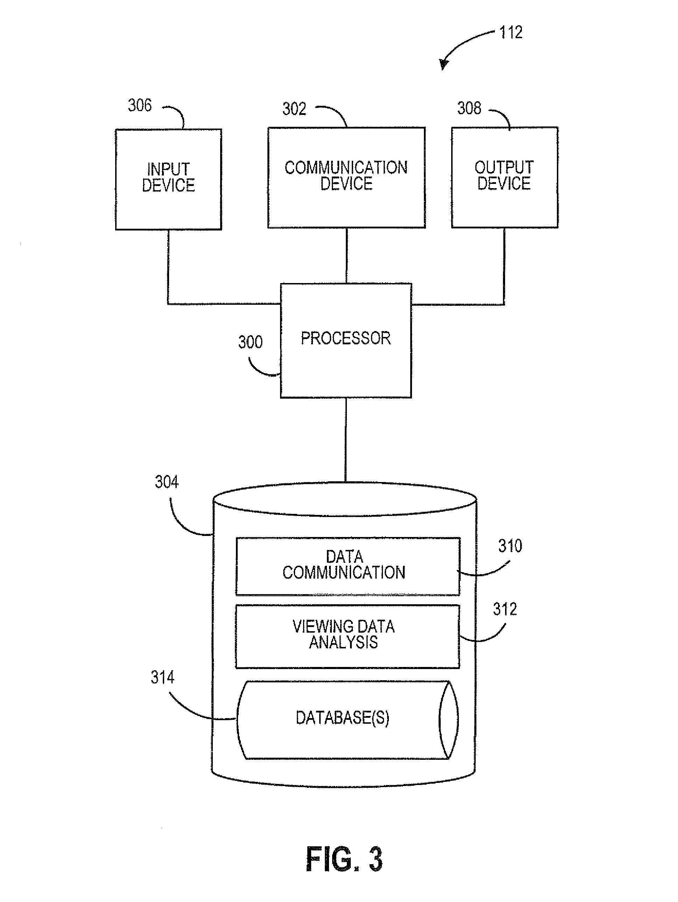

FIG. 3 is a block diagram representation of the data manager computer 112 shown in FIG. 1.

As depicted, the data manager computer 112 includes a computer processor 300 operatively coupled to a communication device 302, a storage device 304, one or more input devices 306 and one or more output devices 308.

Communication device 302 may be used to facilitate communication with, for example, other devices (such as the above-mentioned DVRs, the ad database 114 and the mailer computer 116). The input device(s) 306 may comprise, for example, a keyboard, a keypad, a mouse or other pointing device, a microphone, knob or a switch, an infra-red (IR) port, a docking station, and/or a touch screen. The input device(s) 306 may be used, for example, to enter information. Output device(s) 308 may comprise, for example, a display (e.g., a display screen), a speaker, and/or a printer.

Continuing to refer to FIG. 3, storage device 304 may comprise any appropriate information storage device, including combinations of magnetic storage devices (e.g., magnetic tape and hard disk drives), optical storage devices, and/or semiconductor memory devices such as Random Access Memory (RAM) devices and Read Only Memory (ROM) devices. At least some of these devices may be considered computer-readable storage media, or may include such media.

In some embodiments, the hardware aspects of the data manager computer 112 may be entirely conventional.

Storage device 304 stores one or more programs or portions of programs (at least some of which being indicated by blocks 310, 312) for controlling processor 300. Processor 300 performs instructions of the programs, and thereby operates in accordance with the present invention. In some embodiments, the programs may include a program 310 that programs the data manager computer 112 to engage in data communications with other devices.

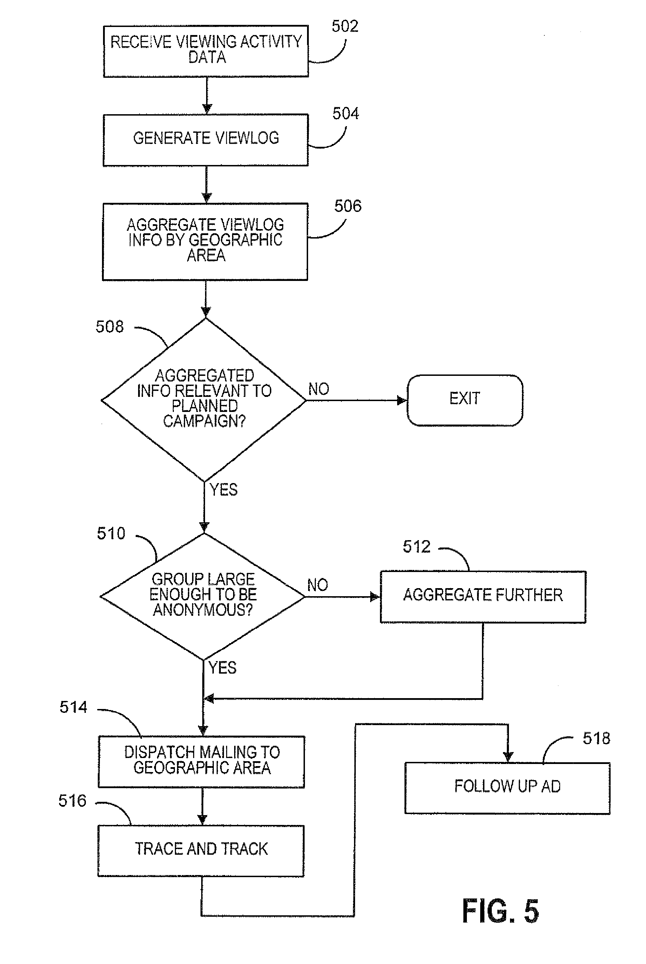

Continuing to refer to FIG. 3, the storage device 304 may also store a viewing data analysis application program 312. Functionality embodied in the viewing data analysis application program 312 will be described below in connection with FIG. 5.

There may also be stored in the storage device 304 other software, such as one or more conventional operating systems, device drivers, other application programs for performing other functions, etc.

Still further, the storage device 304 may store various databases (block 314) that the data manager computer 112 employs in connection with its operations. The database(s) may include, for example, both raw and compiled data that reflects the commercial message viewing and/or skipping behavior of users of the DVRs in the system 100. Further, the database(s) may include rules relating to selection of direct mail advertising solicitations based on the compiled viewing/skipping data.

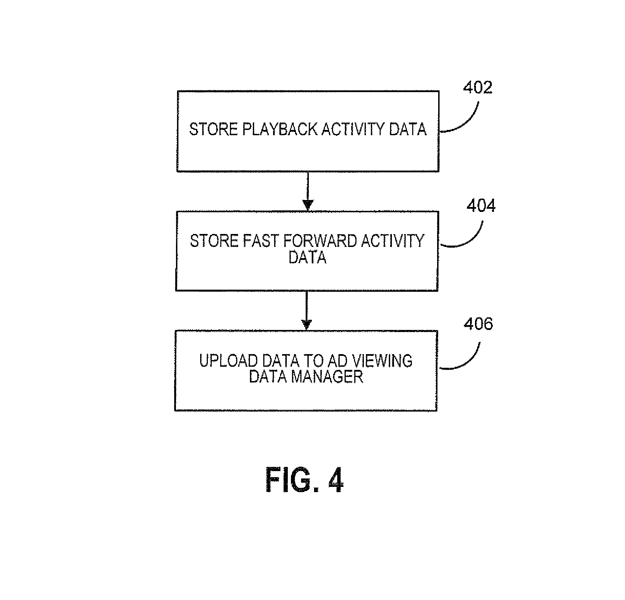

FIG. 4 is a flow chart that illustrates a process performed by the DVR 102 in accordance with aspects of the present invention. It is assumed for purposes of FIG. 4 that the DVR, in accordance with user input, has recorded a number of TV programs and that commercial messages are interspersed within the recorded TV programs. It is further assumed that the user operates the DVR to selectively play back recorded TV programs and while doing so views some of the commercials while fast-forwarding through part or all of other commercials so as to skip viewing of the latter category of commercials. All of these activities are, of course, conventional and may occur in conjunction with the user's operation of a remote control device (e.g., item 103, FIG. 1) for controlling the DVR 102.

However, in accordance with aspects of the invention, and as indicated at 402 in FIG. 4, the DVR 102 (via CPU 200) keeps track of (i.e., stores data regarding) the programs viewed/played back by the user. In some embodiments, this data may take the form of the channel on which the played-back program was transmitted and the time at which the program was originally transmitted by the video source to the DVR. In particular, the DVR may store start and end times (of original transmission) for the program material that is played back. (The actual program name need not be stored.) For example, an example data entry for playback activity may be as follows:
Channel 4; 12/3/09; 9:30:00 p.m. to 10:00:00 p.m.

This entry indicates that the DVR 102 played back the programming originally broadcast on Dec. 3, 2009 from 9:30 to 10:00 p.m. on channel 4.

In some embodiments, the date/time at which the playing back occurred may also be stored in the DVR as part of the same entry.

In addition, and as indicated at 404, the DVR may also store a data entry or entries to indicate time intervals of the played-back program that the user skipped by fast-forwarding. An example "skipped" sub-entry for the above activity data entry could be as follows:
FF: 9:14:30 to 9:16:00; 9:26:10 to 9:26:50.

This sub-entry indicates that the user skipped the portions of the program (possibly commercials) broadcast from 9:14:30 to 9:16:00 and from 9:26:10 to 9:26:50.

In some embodiments, and as indicated at 406, the DVR 102 uploads on a daily basis (say, in the middle of the night) to the data manager computer 112 (via the data communication network 110) all playback/skip entries/sub-entries stored by the DVR 102 during the preceding 24 hour period. In doing so, in some embodiments, the DVR may also identify the ZIP code in which it is located and the video source (e.g., cable television provider) to which it was coupled and/or from which the programming was recorded. In addition or alternatively, the DVR may identify itself by a unique DVR unit identifier. This latter data may also be accompanied by an identification of the DVR supplier for the DVR unit in question. The unit identifier may, for example, be used in cases where the owner of the DVR has opted in to receive individually targeted marketing/advertising messages. In addition, or in other cases, and as will be seen, the DVR unit identifier may be used by the data manager computer 112 to identify the ZIP code in which the DVR is located (e.g., in cases when the ZIP code information is not included in the uploaded information from the DVR).

As an alternative to daily uploads, the uploads may occur at less frequent intervals, but this may be less desirable as the potential value of the commercial viewing/skipping data may decrease with the passage of time. When continuous Internet communications are utilized, the commercial viewing/skipping data may be uploaded in near real time and indeed may be mined to allow the data manager computer 112 to substitute alternative ads to similar demographic groups in later time zones that will be receiving the same broadcast. The data manager computer 112 could rebate the advertising fees to the original advertiser and charge a premium fee to the replacement advertiser who would be receiving a higher value (better targeted) placement.

FIG. 5 is a flow chart that illustrates a process that is at least partially performed by the data manager computer 112 in accordance with aspects of the present invention.

At 502 in FIG. 5, the data manager computer 112 receives the viewing/skipping data uploaded from the DVR 102 and from some or all of the other DVRs in the system 100. This may occur during a suitable overnight period each day, and may occur at the initiative of the DVRs and/or in response to polling conducted by the data manager computer 112. For example, the user may be allowed to schedule the data upload for a time that will not interfere with his/her use of the telephone. If broadband Internet access is being utilized then the connection is essentially active at all times and data can be exchanged in real time.

At 504, the data manager computer 112 generates a log of commercial viewing and/or skipping for each of the DVRs. This is done based on the viewing/skipping data received at 502 and also based on information ("commercial message schedule information") that indicates for each channel what commercials were presented at what times. (The times may be during the most recent 24-hour period or may be from earlier days on which played-back programs were originally recorded on the DVRs.) The data manager computer 112 may obtain the commercial message schedule information from the ad database 114, which may in some embodiments be integrated with the data manager computer 112. By matching the viewing times and skipping events as indicated by the uploaded DVR data with the commercial message schedule information, the data manager computer 112 builds for each DVR a log that indicates what commercials and/or types of commercials were viewed, skipped and partially viewed and partially skipped by using each DVR during the previous 24 hour period.

At 506, the data manager computer 112 aggregates the viewing/skipping log information generated at 504 for all DVRs within a particular geographical area, such as within a given ZIP code. The aggregated data may, for example, summarize for the ZIP code in question, for each commercial, how many DVRs played back the commercial without skipping, how many DVRs played back the commercial but with the viewer skipping a portion of the commercial, and how many played back the commercial, but with complete fast forwarding through the commercial. In addition to aggregation of the data within a geographical area, the data manager computer 112 may perform statistical analysis on the aggregated data to identify categories of commercials or individual commercials that are relatively popular or relatively unpopular with viewers within the geographical area (at least for the current time period).

As noted above, the data manager computer 112 may "know" the ZIP code for each DVR because that information was included in the upload from the DVR. Alternatively, at least in some cases, the data manager computer 112 may receive a unique identifier for the DVR in each upload and may use this information to determine the ZIP code for the DVR. For example, the data manager computer 112 may store a database that links each DVR identifier to the corresponding ZIP code. Alternatively, the DVR supplier 104 may store such a database, which may be accessible to queries from the data manager computer 112.

Following block 506 is a decision block 508. At 508 the data manager computer 112 applies one or more decision rules to determine whether the statistical information developed at 506 is relevant to one or more planned direct mail campaigns or one or more inquiries from one or more direct mail marketing clients. For example, if a direct mail marketing client is planning a campaign to promote a certain brand of cars, the data manager computer 112 may determine whether car commercials are currently relatively popular with viewers and/or in what ZIP codes car commercials are being viewed by a relatively high proportion of viewers. In other embodiments, the data manager computer 112 may (based on commercial viewing/skipping behavior) assemble a complex group profile of the (e.g., current or dynamic) interests and/or aversions of viewers in one or more ZIP codes and may compare the profiles with clients' inquiries as to ZIP codes that would be hospitable to certain types of direct mail campaigns.

If the data manager computer 112 makes a positive determination at 508 (i.e., if useful/relevant information is present in the aggregated viewlog data), then decision block 510 follows 508. At 510, the data manager computer 112 may perform a further analysis of the aggregated viewlog data or results derived therefrom to assure that the aggregate/result information is derived from a sufficient number of households so as to shelter the privacy of individual households. If such is not the case, then block 512 follows block 510. At 512, the data manager computer 112 aggregates the information for the individual ZIP code/geographical area with information for other (e.g., adjoining) ZIP codes/geographical areas to a sufficient extent to assure the privacy of individual viewers/households. Data resulting from step 506 (and/or step 512) is then downloaded from the data manager computer 112 to one or more mailers' computers (block 116 in FIG. 1).

Block 514 follows block 512 (or directly follows decision block 510, if the original data aggregation was large enough to assure individual privacy). At 514, a mailer's computer 116 selects and/or dispatches a direct mail campaign based on results of the data analysis from the data manager computer 112. For example, the mailer's computer may dispatch a direct mail ad for a brand of car to every household in the five ZIP codes within a metropolitan area where those recipient ZIP codes were found by the data manager computer 112 to have the highest viewership of car commercials in the metropolitan area during the most recent day's DVR viewing.

At block 516 the mailer may use conventional techniques to trace and track the mail pieces through the postal system. Such techniques may include the United States Postal Service PLANET code or Intelligent Mail Barcode (IMB). When delivery of the mail pieces is imminent, or has just occurred, the mailer may place follow up television commercials (block 518) in an appropriate broadcast market or markets in order to reinforce the effect of the mailing itself with the target audience.

In some embodiments, the mailer is a company of the type that incorporates numerous unrelated print advertising pieces in a single mailing envelope. The mailer may alter the mix of ads included in each envelope on a ZIP-code-by-ZIP-code basis in response to data indicative of relative viewership among individual commercials or types of commercials based on DVR-uploaded data for each ZIP code.

In embodiments discussed above, decisions concerning direct mail campaigns, and/or selections of direct mail ads, were based on aggregated statistics within a ZIP code or other geographic area. However, in addition, the system 100 may be used to target direct mail ads to individuals and/or households that have elected to opt in for individual attention in the system. That is, individual and/or household users of DVRs may register with the system and consent that their individual commercial viewing/skipping behavior be monitored in the system to select direct mail solicitations to be sent to them.

In other embodiments, the system may be modified so that extra commercials may be downloaded out of band to DVRs. When a user of the DVR skips a commercial that was included in a recorded program, the DVR may automatically substitute one of the extra commercials (e.g., a commercial for a different type of product) in place of the skipped commercial. The user may have agreed to have this substitution of commercials occur in return for some benefit, such as a reduction in subscription charges from the DVR supplier. Decisions as to what direct mail to send into an area may be based at least in part on viewer behavior with respect to skipping or viewing substitute commercials as well as or instead of basing such decisions on skipping or viewing of commercials that were originally included in the programming. Decisions of this type may also be based on how quickly, or with how much latency, commercials are skipped. Promptness or delay in skipping may be interpreted respectively as indicative of relative disliking or liking of the commercials. Such information may also be applied in decisions relating to whether and/or how to re-edit commercials to make them more appealing to viewers.

In some embodiments, where a viewer habitually skipped entire blocks of commercials, the data manager computer 112 may refrain from making any judgments based on such a viewer's behavior.

In some embodiments, when viewers choose to have their identity revealed (perhaps in exchange for discounted service charges or other compensation), viewing statistics may be compiled which pertain to specific individuals or households. In such cases, the statistics may be used to determine the content or implementation of marketing efforts targeted to such individuals or households. Such efforts may, for example, involve selecting individual ad inserts to be included in the mail piece addressed to a particular individual as part of a mass mailing. In some embodiments, where viewers have opted to permit individualized tracking of their commercial viewing/skipping behavior, the individual data may be analyzed to develop highly detailed "psychographic" profiles of blocks or neighborhoods, and marketing efforts may be designed and/or targeted based on such profiles.

In some embodiments, users who are registered with the system may be permitted to actuate a certain button or buttons on the remote control unit while viewing a commercial to indicate a response to the commercial. The response may be reported to the data manager computer 112 by the DVR via an upload from the DVR. This may occur in real time or on a delayed basis (e.g., with the daily upload of playback/commercial viewing/skipping activity). Depending (e.g.) on prior arrangements with the user, the response may be interpreted by the data manager computer 112 as a request to send additional information by direct mail and/or an order form to the user; or the response may be taken as an order for the product that was advertised in the commercial.

As disclosed hereinabove, aggregated information about viewers' behavior within a geographical area relative to viewing or skipping played-back television commercials may be used to guide decision-making about direct mail advertising into the geographical area. In other embodiments, the same type of information may be used in connection with deciding on other types of advertising activities, such as what ads to include in newspaper advertising supplements, automatic telephone solicitations and/or radio ads. The geographical area may be defined by one ZIP code or more than one ZIP code. In some embodiments, the geographical area may include a number of contiguous ZIP codes, such as 10, 20 or 100 ZIP codes. Alternatively, the geographical area may be defined on some other basis, such as by parcel carrier's delivery routes, newspaper delivery routes, etc. The term "geographical area", as used herein and in the appended claims, refers to an area that includes five or more housing units.

It is noted that the term ZIP code is commonly understood to refer to a five-digit ZIP code (e.g., 10010). Alternatively, however, three-digit or nine-digit ZIP codes are also intended herein to be included in the term "ZIP code". Those who are skilled in the art will recognize that nine-digit ZIP codes may be used to designate geographical areas referred to a "block faces".

The data manager computer 112 and mailer computer 116 are depicted separately in FIG. 1, but in some embodiments may be integrated or combined.

Although the above description and accompanying drawings suggest an order in which process steps may be performed, the suggested order of steps is not required and rather may be varied in any manner that is practicable.

As used herein and in the appended claims, the term "computer" refers to one computer or to two or more computers that cooperate and/or communicate with each other.

As used herein and in the appended claims, the term "processor" refers to one processor or to two or more processors that cooperate and/or communicate with each other.

The words "comprise," "comprises," "comprising," "include," "including," and "includes" when used in this specification and in the following claims are intended to specify the presence of stated features, elements, integers, components, or steps, but they do not preclude the presence or addition of one or more other features, elements, integers, components, steps, or groups thereof.

A number of embodiments of the present invention have been described. Nevertheless, it will be understood that various modifications may be made without departing from the spirit and scope of the invention. Other variations relating to implementation of the functions described herein can also be implemented. Accordingly, other embodiments are within the scope of the following claims.

## Claims

1. A method comprising:
compiling (506) in a computer (112) statistics indicative of viewer behavior within a geographical area, the viewer behavior relating to viewing and/or skipping television commercials and relating to a plurality of viewers; and
automatically selecting by the computer, based on the statistics, at least one advertising solicitation for presentation to recipients in the geographical area by a communication channel other than television.

2. The method according to claim 1, wherein the communication channel is direct mail.

3. The method according to claim 1, wherein the communication channel is a newspaper advertising supplement.

4. The method according to claim 1, wherein the communication channel is automatic telephone solicitation.

5. The method according to claims 1, wherein the communication channel is radio.

6. The method according to any one of claims 1 to 5, wherein the geographical area is entirely within a state or province.

7. A method according to any preceding claim, further comprising:
receiving (502), in said computer (112), information indicative of viewing and/or skipping by a plurality of viewers (102) of television commercials presented to the viewers;
using the received information to compile said statistics in the computer (112), the compiled statistics summarizing viewing and/or skipping of the television commercials within a geographical area;
based at least in part on the compiled statistics, selecting said advertising solicitation for the geographical area; and
dispatching (514) the selected advertising solicitation on paper to recipients in the geographical area.

8. The method according to any preceding claim, wherein the geographical area includes at least five housing units.

9. The method according to any preceding claim, wherein the geographical area is defined by a single postal code.

10. The method according to any of claims 1 to 8, wherein the geographical area is defined by a plurality of contiguous postal codes.

11. The method according to claim 10, wherein the plurality of contiguous postal codes consists of no more than 10 postal codes.

12. The method according to any preceding claim, wherein the selected advertising solicitation is included in an advertising supplement delivered with a newspaper.

13. The method according to any preceding claim, wherein the plurality of viewers includes at least 20 viewers.

14. The method according to any preceding claim, wherein the compiled statistics do not disclose information concerning any single individual or household among the viewers.
